## Europäisches Patentamt

## European Patent Office

## Office européen des brevets

(19)

(11) Veröffentlichungsnummer: **0 345 281 B1**

(12)

# EUROPÄISCHE PATENTSCHRIFT

(45) Veröffentlichungstag der Patentschrift:
**11.09.91 Patentblatt 91/37**

(51) Int. Cl.$^5$: **A23N 1/02**, B02C 19/18,
A23P 1/14

(21) Anmeldenummer: **88901595.4**

(22) Anmeldetag: **15.02.88**

(86) Internationale Anmeldenummer:
**PCT/EP88/00109**

(87) Internationale Veröffentlichungsnummer:
**WO 88/06006 25.08.88 Gazette 88/19**

(54) **VORRICHTUNG ZUR EXPLOSIONSZERKLEINERUNG VON ORGANISCHEN PRODUKTEN.**

(30) Priorität: **19.02.87 DE 3705271**

(43) Veröffentlichungstag der Anmeldung:
**13.12.89 Patentblatt 89/50**

(45) Bekanntmachung des Hinweises auf die
Patenterteilung:
**11.09.91 Patentblatt 91/37**

(84) Benannte Vertragsstaaten:
**AT BE CH DE FR GB IT LI LU NL SE**

(56) Entgegenhaltungen:
**DE-A- 2 632 045
DE-A- 3 021 083
DE-A- 3 347 152
US-A- 3 456 576
US-A- 4 292 334**

(73) Patentinhaber: **BUSE ANLAGENBAU GMBH
Sprudelstrasse
W-5462 Bad Hönningen (DE)**

(84) Benannte Vertragsstaaten:
**BE DE FR GB LI LU NL**
Patentinhaber: **Helwig, Emmy
Ulrichstrasse 17
W-5014 Kerpen (DE)**

(84) Benannte Vertragsstaaten:
**AT BE CH DE FR GB IT LI LU NL SE**

(72) Erfinder: **HARSANYI, Eugen
Ulrichstrasse 17
W-5014 Kerpen (DE)**
Erfinder: **Helwig, Emmy
Ulrichstrasse 17
W-5014 Kerpen (DE)**

(74) Vertreter: **Köhne, Friedrich, Dipl.-Ing.
Rondorferstrasse 5a
W-5000 Köln 51 (Marienburg) (DE)**

**Beschreibung**

Die Erfindung bezieht sich auf eine Vorrichtung gemäß dem Oberbegriff des Anspruches 1.

Eine solche Vorrichtung ist beispielsweise aus der DE-A-2632045 bekannt. Bei dieser Vorrichtung wird das gesamte Gut nach einem oder mehreren Sprengvorgängen in die Entspannungskammer entladen. Beim inhomogenen Sprengen befinden sich dann die nicht gesprengten harten Anteile des Produktes vermischt mit den gesprengten Anteilen in der Entspannungskammer, so daß anschließend verschiedene Arbeitsvorgänge erforderlich sind, um die nicht gesprengten Anteile von den gesprengten Anteilen des Produktes zu trennen.

Der Erfindung liegt die Aufgabe zugrunde, eine Vorrichtung zu schaffen, durch welche die Aufbereitungsvorgänge wesentlich vereinfacht und erleichtert werden.

Die gestellte Aufgabe wird erfindungsgemäß durch die Merkmale des Kennzeichens des Anspruches 1 gelöst.

Die Erfindung bezieht sich auch auf ein Verfahren mit den Merkmalen des Anspruchs 24.

Vorteilhafte Ausgestaltungen der Erfindung ergeben sich aus den Unteransprüchen.

In der Zeichnung sind Ausführungsbeispiele der Erfindung im Schema dargestellt, und zwar zeigen

Figur 1 eine Frontalansicht einer Druckkammer und einer darunter befindlichen Entspannungskammer,

Figur 2 eine Seitenansicht zu Figur 1 mit Fließschema einer anschließenden Aufbereitungsvorrichtung,

Figur 3 eine Vorrichtung zur Verdeutlichung des Ablaufes des Verfahrensprozesses,

Figur 4 ein weiteres Ausführungsbeispiel abgewandelt zu Figur 3,

Figuren 5 bis 18 weitere Ausführungsbeispiele und Verfahrensschemen.

Die nachfolgend erläuterten Vorrichtungen dienen vor allem einer optimalen Ausbeute der zu behandelnden Produkte, einem niedrigen Energieverbrauch, der Erzeugung einer besseren Qualität unter Beibehaltung der grundlegenden Eigenschaften der gewonnenen Inhaltsstoffe. Dabei gehen alle Vorrichtungen von einer Druckzerkleinerung als Vorstufe aus, und zwar durch Druckbeaufschlagung mit anschließender Entspannung.

Die zu verarbeitenden Produkte können jeglichen organischen Ursprungs sein. Nachfolgend sind Beispiele für die Produktionslinien genannt, die durchgeführt werden können :

| | |
|---|---|
| Avocadofrüchte : | Zur Öl- und Pulpegewinnung, |
| Bananen : | Zur Stärke-, Alkohol-, Faser- und Pulvergewinnung, |
| Datteln : | Zur Alkohol- und Zuckergewinnung mit Entkernung, |
| Früchte : | Entkernen, Entstielen, das Fruchtfleisch zur weiteren Verarbeitung aufschließen, |
| Getreide : | Zur Gewinnung von Vollkornmehl, Alkohol- und Stärke, |

Aufbereitung von Gewürzen und Gewürzmischungen, Kaffekirschen entpulpen,

| | |
|---|---|
| Knollen, Wurzeln : | Zur Stärke- und Alkoholgewinnung, |
| Oliven : | Zur Erreichung einer höheren Ölqualität und Ausbeute, |
| Paprika : | Pulvergewinnung aus frischen und getrockneten Schoten, |
| Sojabohnen : | Zur Gewinnung von Vollfettsojamehl mit einer Korngröße kleiner als 100 my, ohne Vorkühlung,. |
| Weintrauben : | Erreichung einer besseren Qualität des Weines, |
| Zuckerrohr, Zuckerrüben : | Zur Gewinnung von Alkohol oder Zucker. |

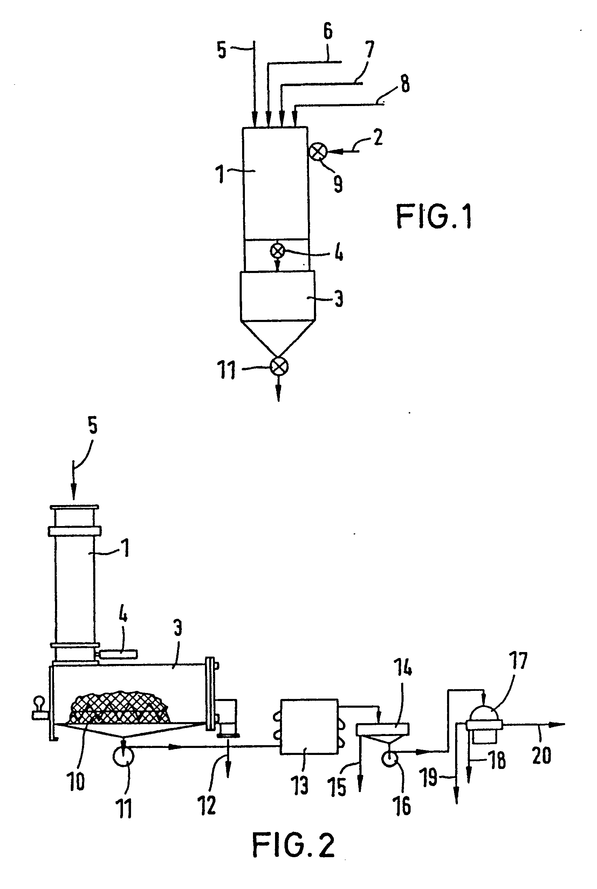

Figur 1 zeigt eine Vorrichtung als Vorstufe zu den nachfolgend erläuterten Verfahrensprinzipien mit einem Druckzylinder 1, einer Entspannungskammer 3, einem zwischengeschalteten Ventil 4 und einer Zuleitung 5 bzw. mehreren Zuleitungen 6, 7, 8 für die Eingabe eines oder mehrerer Produkte bzw. Rohstoffe. Ferner ist eine Zuleitung 2 mit Ventil 9 für Druckgas vorgesehen. Als Druckgas wird bevorzugt Druckluft, Kohlendioxyd oder Stickstoff oder ein anderes neutrales Gas verwendet, und zwar je nach den wirtschaftlichen oder stofflichen Gegebenheiten. In dieser Vorstufe können auch wiederholte Sprengungen des Produktes vorgenommen werden, um eine bessere Aufschließung der Produktzellen zu erreichen.

Allen nachfolgend erläuterten Arbeitsvorgängen ist eine Entspannungskammer 3, deren horizontale Ausdehnung größer als vertikale Ausdehnung ist, und eine eingesetzte, vorzugsweise einfahrbare Trennvorrichtung 10 gemeinsam, die weiter unten noch näher erläutert ist.

Die Zeichnungen seien nachfolgend anhand von Ausführungsbeispielen für verschiedene organische Produkte erläutert.

## Beispiel 1 : Avocadofrüchte

In eine auf bekannte Weise arbeitende Druckkammer 1 werden die Früchte eingefüllt und gemäß dem Fließschema nach Figur 2 so gesprengt, daß nur die Fruchtfleischzellen in der Entspannungskammer 3 aufgeschlossen werden, während die unbeschädigten Kerne durch die vorzugsweise einfahrbare Trennvorrichtung 10 getrennt und am Auslaß 12 ausgebracht werden. Zur weiteren Verarbeitung wird nur das aufgeschlossene Fruchtfleisch am Auslaß 11 abgezogen. Das Fruchtfleisch liegt hier in Breiform vor und wird durch eine anschließende Fördervorrichtung zu einem besonders statisch arbeitenden Mischer bzw. Wärmeaustauscher 13 thermisch behandelt. Das Produkt wird dann einer Siebvorrichtung 14 zugeführt, wo die Feinstteilchen beim Abzug 15 abgeleitet werden. Ein erhaltenes Öl-Wassergemisch wird durch eine Fördervorrichtung 16 zu einer Ölseparator-Zentrifuge 17 gefahren und in Wasser und Pulpe einerseits und hiervon befreitem Öl andererseits getrennt und abgeführt. Dabei wird das Wasser bei Ablauf 18, die Pulpe beim Abzug 19 und das Öl beim Abzug 20 abgezogen.

Die Versuche haben zu folgenden Ergebnissen geführt :

| Druckgas | Luft | Schalen | 2.00 % |
| Druck bis | 10 bar | Fruchtfleisch | 83,00 % |
| Verweilzeit | keine | Kerne | 15,00 % |

Im Fruchtfleisch befanden sich Öl 16,00 %
Wasser 68,00 %

Ausbeute auf TS berechnet 85,00 %
Pulpe 16,00 %

## Beispiel 2 : Datteln

Bekanntlich besitzen Datteln einen hohen Zuckergehalt. Wegen der bisher nicht abtrennbaren Kerne war das Mahlen der Datteln sehr schwierig und es konnte der Saft nicht zur Zuckergewinnung erarbeitet werden. Es war auch nicht wirtschaftlich möglich, daraus Alkohol zu gewinnen.

Mit der beschriebenen integrierten Druckzerkleinerung im Zusammenhang mit der horizontalen Entspannungskammer und der einfahrbaren Trennvorrichtung ist es möglich, das Fruchtfleisch ohne Beschädigung der Kerne aufzuschließen und die Kerne im gleichen Vorgang sofort abzutrennen.

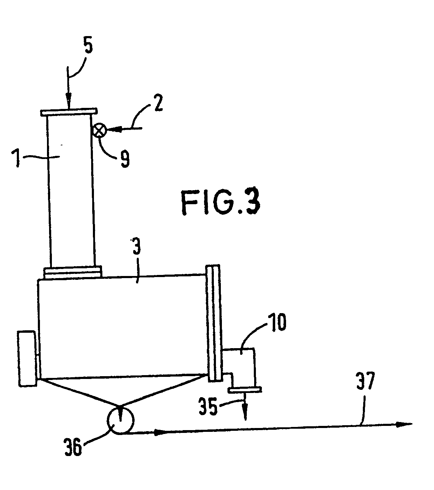

Figur 3 veranschaulicht den Ablauf des Prozesses. Die ganzen Datteln werden in Richtung des oberen Pfeiles 5 in die Druckkammer 1 gefüllt, die anschließend mit Druckgas beaufschlagt wird. Sodann wird wieder in die Entspannungskammer 3 inhomogen gesprengt. Die eingesetzte, vorzugsweise einfahrbare Trennvorrichtung 10 trennt die Kerne ab und fordert diese bei dem Ablauf 35 hinaus. Das von Kernen befreite aufgeschlossene Fruchtfleisch wird beim Abzug 36 abgezogen und durch Leitung 37 zur Gär- und Destillationsstation weitergefördert. Bei der Zuckergewinnung wird aus dem Fruchtfleisch bzw. dem gewonnenen Saft in an sich bekannter Weise der Zucker gewonnen.

Die Versuche haben folgende Ergebnisse gebracht :

| Druckgas | Luft | Zuckergehalt | 16 % |
| Druck bis | 10 bar | Fruchtfleisch | 88 % |
| Verweilzeit | keine | Kerne | 12 % |

Energieverbrauch 0,8 Kw/kg Zucker und 1.8 kw/t Datteln.

Die kernlose Maische hat durch Destillation bereits beim ersten Durchlauf einen weitgehend reinen Alkohol ergeben.

## Beispiel 3 : Früchte allgemein

Alle Früchte haben einen großen oder mehrere kleine Kerne sowie Stengel und Schalen. Die Früchte müssen in einer ersten Stufe grob oder fein zerkleinert werden und für die nachfolgenden Verarbeitungsvorgänge vorbereitet werden. Bei den traditionellen Arbeitsmethoden müssen spezielle Vorzerkleinerer, Entstieler und Entkernmaschinen angewendet werden.

Nach der Erfindung wird durch die integrierte Druckzerkleinerung in Kombination mit der Entspannungskammer und der einsetzbaren, vorzugsweise einfahrbaren Trennvorrichtung der aufgeschlossene Fruchtfleischbrei zur Gewinnung des Obstsaftes in einem praktisch einzigen Vorgang gewonnen und gleichzeitig von den unbeschädigten Kernen, Stengeln und sonstigen Hartbestandteilen befreit. Der Prozeßablauf ist im wesentlichen der gleiche wie zu Figur 3 beschrieben. Wesentlich ist wiederum, daß die Trennung durch die in die Entspannungskammer vorzugsweise einfahrbare Trennvorrichtung direkt in dieser stattfindet und dadurch der Arbeitsvorgang des Trennens wesentlich vereinfacht wird.

Bei Verarbeitung verschiedener Früchte, wie Ananas, Pflaumen u. dgl. wurden folgende Ergebnisse erzielt:

| Druckgas | Luft | Fruchtfleisch 85 % |
| Druck | 10-30 bar | Kerne 15 % |
| Verweilzeit bis 30 s | | |

### Beispiel 4 : Getreide

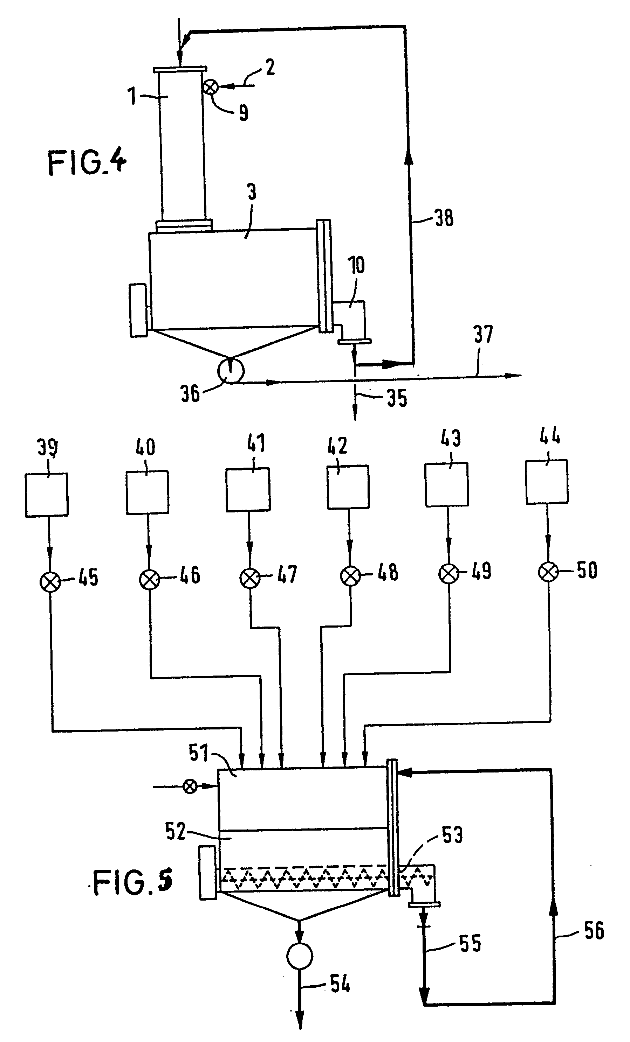

Um eine Vollkornmehlmischung herzustellen, werden verschiedene Getreidekörner vermahlen und einer Rezeptur entsprechend zusammengestellt und gründlich miteinander vermischt. Nach Figur 4 kann durch die Entspannungskammer 3 in Kombination mit der einfahrbaren Trennvorrichtung 10 in einer einzigen Vorrichtung bzw. in einem einzigen Vorgang die zusammengestellte Getreidemischung gesprengt werden. Der nicht erwünschte Anteil mit großen Korngrößen kann abgetrennt und gegebenenfalls in Richtung der in Figur 4 eingezeichneten Leitung 38 wieder in die Druckkammer 1 zurückgeführt und nochmals gesprent werden. Auf diese Weise kann sichergestellt werden, daß immer nur eine entsprechend der Rezeptur homogene Mischung gewonnen wird.

Figur 5 veranschaulicht eine weitere Verarbeitungsmethode, wie eine homogene Mischung mit gleichbleibender Kornfreiheit gewonnen werden kann, wenn nach einer Rezeptur verschiedene Kornanteile zusammengestellt werden. Die verschiedenen Kornarten können aus Behältern 39 bis 44 einzeln oder gemischt über Dosiervorrichtungen 45 bis 50 rezepturgemäß in die Druckkammer 51 gefüllt und mit entsprechendem Gasdruck beaufschlagt und anschließend in die angekoppelte Entspannungskammer 52 gesprengt werden. Durch die eingesetzte, vorzugsweise einfahrbare Tennvorrichtung 53 z.B. in Form einer Förderschnecke, wird die gewünschte Feinstkornmischung bei Ausgang 54 abziehbar von den gröeren Kornanteilen getrennt, die bei Abzug 55 abgeführt und durch eine Leitung 56 zu der Druckkammer 51 zurückgeführt und einem weiteren Sprengvorgang unterworfen werden kann.

### Beispiel 5 : Gewürze und Gewürzmischungen

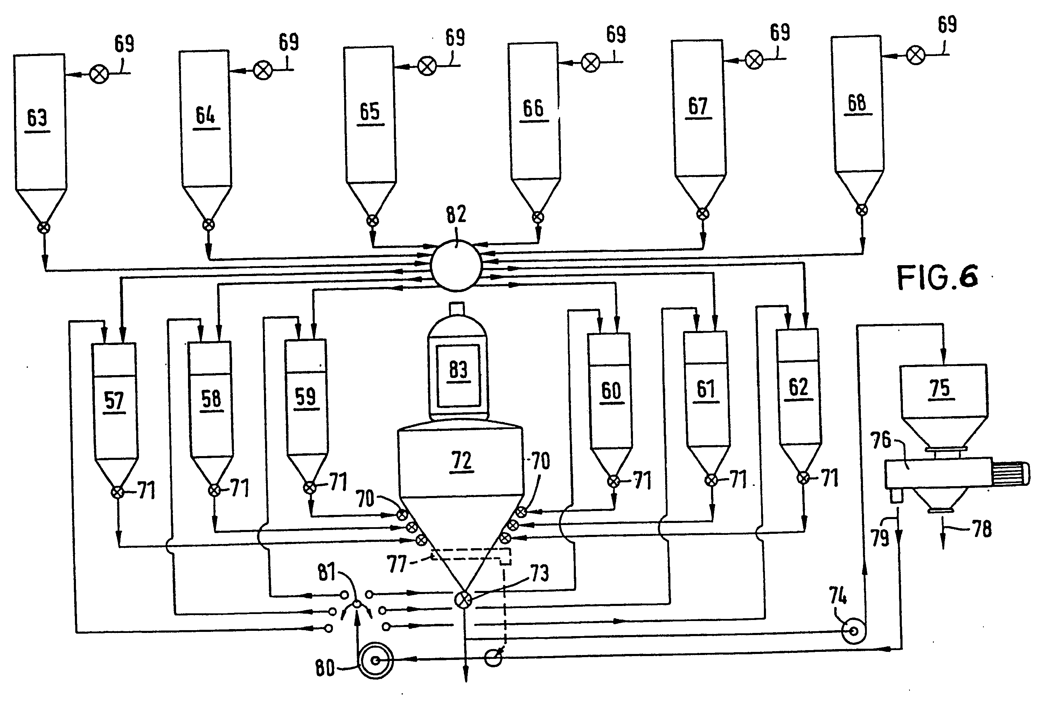

Bei Gewürzen besteht das Problem, das Armona durch die Bearbeitungsvorgänge nicht nachteilig zu beeinflussen. Figur 6 zeigt daher eine weitere Ausgestaltung der erfindungsgemäßen Vorrichtung, die sich besonders für die Gewürzaufbereitung eignet. Hierbei werden mehrere Druckkammern unabhängig voneinander und nacheinander schaltbar an eine zentral liegende Entspannungskammer mit einer kombinierten einsetzbaren, vorzugsweise einfahrbaren Trennvorrichtung angeschlossen. Diese Vorrichtung bringt den wesentlichen Vorteil mit sich, daß man beim Wechseln der Gewürzsorte nur jeweils die Entspannungskammer reinigen muß. Auch für andere Rohstoffe, bei denen diese Probleme eine Rolle spielen, kann die Vorrichtung angewendet werden. Der Prozeßablauf bei Figur 6 ist im wesentlichen folgender. In die Druckkammern, deren Anzahl beliebig sein kann und im vorliegenden Ausführungsbeispiel die Druckkammern 57 bis 62 sind, können aus entsprechenden sechs Rohstoffbehältern 63 bis 68 die Rohstoffe eingefüllt und anschließend mit Druckgas über Leitungen 69 beaufschlagt werden. Es kann nun jede Druckkammer einzeln in Betrieb gesetzt werden. Vor dem Arbeitsbeginn wird überprüft, daß die einzelnen Absperventile 70 der außer Betrieb befindlichen Druckkammern abgeschlossen sind, damit vermieden wird, daß bei Sprengen in einer Druckkammer das entspannende Druckgas nicht in eine außer Betrieb befindliche Druckkammer eindringen kann. Nach dem Öffnen des entsprechenden Expansionsventils 71 schießt der Rohstoff mit großer Geschwindigkeit in die zentrale Entspannungskammer 72 ein und wird dort aufgeschlossen. Durch Öffnen des Ventiles 73 wird das gesprengte Produkt über eine Fördervorrichtung 74 unter Zwischenschaltung einer Vorratskammer 75 einer getrennt aufgestellten Trennvorrichtung 76 dosiert zugeführt. Durch die Entspannungskammer in Kombination mit der vorzugsweise einfahrbaren Trennvorrichtung 77 kann der Anteil mit der gewünschten Kornfeinheit bei Ausgang 78 abgeführt und der Anteil mit der größeren Korngröße über Abzug 79 und eine Fördervorrichtung 80 in die jeweiligen Druckkammern zurückgeführt werden.

Das geschieht durch die Einstellvorrichtung 81, die ein Dosieren gestattet. Die zurückgeführten Anteile können mit einer neuen Füllung gemischt und dann wieder gesprengt werden. Mit Hilfe der Verteilervorrichtung 82 kann eingestellt werden, welche Druckkammern oder -zylinder jeweils arbeiten sollen. Auf der Entspannungskammer 72 ist ein Schnellwechsel-Entlüftungsfilter 83 angebracht, aus welchem die feinsten entweichenden Feststoffpartikel aus der Entspannungskammer 72 zurückgeführt werden können.

Beispiel 6 : Kaffeekirschen entpulpen

Die bekannten Entpulper arbeiten mittels einstellbarer, horizontaler Schlagstäbe. Die Einstelung der Zwischenräume zwischen den Schlagstäben hängt von der Größe der Kaffeekirschen ab. Sind die Stäbe nicht richtig eingestellt, können beim Entpulpen Kaffeebohnen zerschlagen werden.

Bei der erfindungsgemäßen Entspannungskammer in Kombination mit der vorzugsweise einfahrbaren Trennvorrichtung ist es möglich, in einem Vorgang und unabhängig von der Kaffeekirschengröße den Sprengvorgang so durchzuführen, daß alle Kirschenpulpe abgesprengt werden kann, ohne die größeren Bohnen zu beschädigen und anschließend den Trennvorgang durchzuführen.

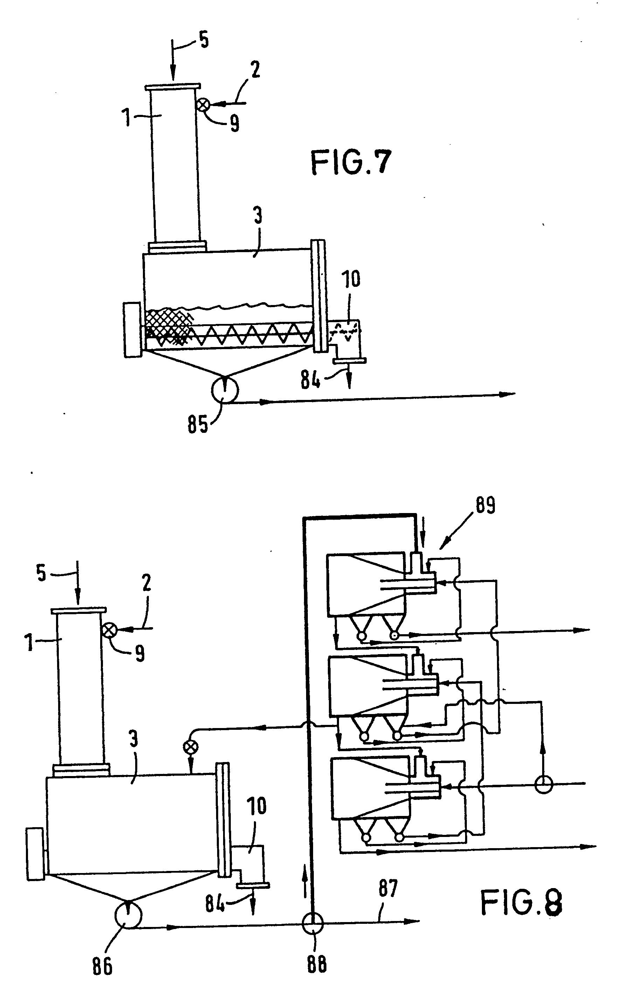

Der Prozeßablauf gemäß Figur 7 läuft ähnlich wie vorbeschrieben ab, mit dem Unterschied, daß hier die Kerne, das heißt die Kaffeebohnen aufgefangen und beim Abzug 84 abgeführt werden, während der Fruchtfleischbrei beim Ausgang 85 abgezogen wird.

Bei den Versuchen wurden folgende Ergenisse erreicht :

```
Druckgas      Luft        Schüttgewicht 600 kg/m³
Druck bis     10 bar      Kaffebohnen 22 kg
                          Pulpe 78 kg


Pulpe beinhalten: 84 % Wasser     = 65,5  kg
                  16 % Feststoff = 12,48 kg
```

Beispiel 7 : Knollen oder Wurzeln

Als Anwendungsbeispiel wird bei der Stärke- oder Alkoholgewinnung von der tropischen Knolle der Cassaba, Yucca oder Maniok ausgegangen. Bei der erfindungsgemäßen Verarbeitung gemäß Figur 8 wird von der zur Figur 1 beschriebenen Druckzerkleinerung als Vorstufe ausgegangen und diese wiederum mit einer Entspannungskammer 3 in Kombination mit der einfahrbaren Trennvorrichtung 10 ausgestattet. Im Vergleich mit traditionellen Verarbeitungsmethoden können erfindungsgemäß die Knollen in einem einzigen Vorgang und in einer einzigen Vorrichtung inhomogen so optimal aufgeschlossen werden, daß die Schalen abgetrennt und die hiervon befreite Stärkemilch bei dem Abzug 86 zur weiteren Verarbeitung über die Leitung 87 abgeführt werden kann. Zum Verfeinern der Stärkemilch kann man diese durch Umschalten eines Ventils 88 einer sechsstufigen im Gegenstromprinzip arbeitenden Auswaschstation 89 zuführen.

Bei den Versuchen wurden folgende Ergebnisse erreicht :

```
Druckgas        Luft        Pulpe 15 %
Druck           40/60 bar   Wasser 65 %
Verweilzeit     keine       Stärke 30 %
```

Im herkömmlichen Verfahren wurden die Wurzeln gewaschen, geschält, vorzerkleinert, und durch Reiben werden die Zellen zerrissen. Hieraus wird dann die Stärke gewonnen. Bei der Fruchtwasserabtrennung werden die stärkehaltigen Wurzeln auf 40 bis 45% TS konzentriert. Es müssen also verschiedene spezielle Maschinen für Waschen, Schälen, Vorzerkleinern, Reiben und Entwässern vorgesehen werden.

Durch die erfindungsgemäße Entspannungskammer 3 in Kombination mit der einfahrbaren Trennvorrichtung 10 wird ermöglicht, daß die integrierte Druckkammer optimal ausgenutzt werden kann und daß in einem einzigen Vorgang bzw. in einer Vorrichtung die nach dem Waschen eingefüllten Wurzeln von den Schalen befreit werden. Alle stärkehaltigen Zellen werden optimal aufgeschlossen und gleichzeitig entwässert. Die so gewonnene Stärkemilch kann dann zur Extraktion und Raffination weitergeleitet werden. Die Schalen werden von der einfahrbaren Trennvorrichtung abgetrennt und herausgefahren. Es sei hier hervorgehoben, daß durch denselben Prozeßvorgang auch andere Knollen und Wurzeln, wie zum Beispiel Kartoffeln, behandelt werden können.

Beispiel 8 : Oliven

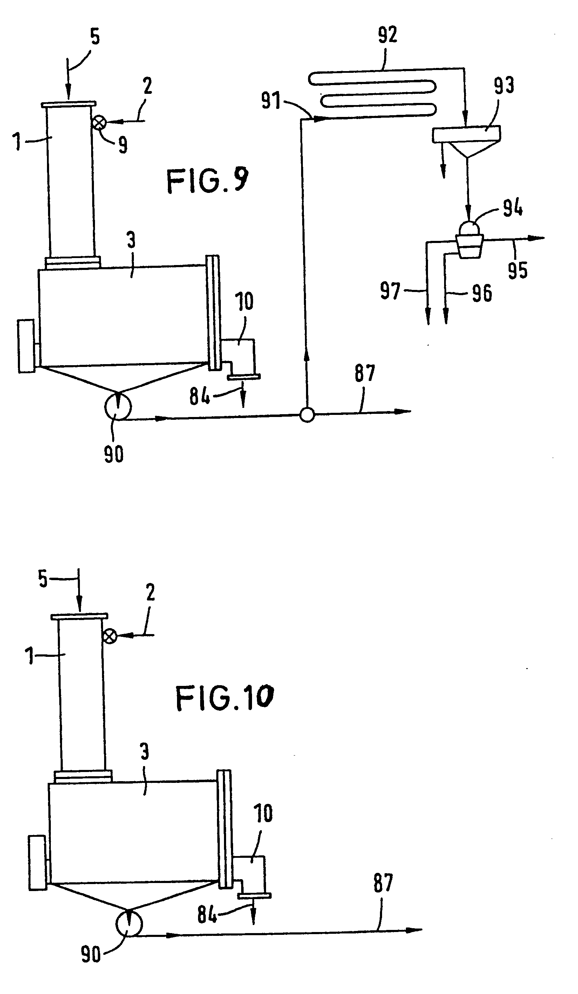

Bei der Verarbeitung von Oliven zur Ölgewinnung wird die horizontale Entspannungskammer in Kombination mit der einfahrbaren Trennvorrichtung und mit der integrierten Druckkammer so gesteuert, daß beim inhomogenen Sprengen der Oliven nur das Fruchtfleisch gesprengt und die unbeschädigten Kerne abgetrennt werden können. Figur 9 veranschaulicht die weitere Verarbeitung des abgetrennten Fruchtfleischbreies, wobei dieses durch eine Fördervorrichtung 90 unter Zuführung von Prozeßwasser bei der Zuleitung 91 einem kontinuierlich arbeitenden statischen Misch- und Wärmetauscher 92 zugeführt und dort thermisch behandelt wird. Durch ein Sieb 93 werden Feinstteilchen abgesiebt. Ferner wird mittels einer Öl-Separator-Zentrifuge 94 das Öl bei Leitung 95, das Wasser bei Leitung 96 und die Feststoffteilchen bei Leitung 97 abgeführt.

Die Versuche ergaben folgendes :

| | | |
|---|---|---|
| Druckgas | $CO_2$ | Qualitätsöl 25 % |
| Druck bis | 10 bar | Pulpe 30 % |
| Verweilzeit | keine | Wasser 45 % |

Beispiel 9 : Paprika

Mit Hilfe der Entspannungskammer und der einfahrbaren Trennvorrichtung können frische Paprikaschoten mit Kernen, Kerngehäusen und Stengelresten so gesprengt werden, daß nach dem Sprengen die unbeschädigten Kerne und Stengelreste von dem aufgeschlossenen Fruchtfleischbrei abgetrennt werden können. In gleicher Weise können auch getrocknete Paprikaschoten gesprengt werden. Danach können die Anteile mit groben Korngrößen abgetrennt und zum nochmaligen Sprengen der Druckkammer zurückgeführt werden. Figur 10 zeigt den Prozeßablauf. In die integrierte Druckkammer 1 werden die frischen Paprikaschoten bei 5 eingefüllt und durch Druckgas über Ventil 9 beaufschlagt.

In der horizontalen Entspannungskammer 3 mit der eingefahrenen Trennvorrichtung 10 werden die Kerne und andere Stoffteile bei 84 abgeführt, während der Fruchtfleischbrei bei 90 abgetrennt und ausgezogen werden kann. Der Brei kann über eine Leitung 87 und eine entsprechende Fördervorrichtung zu einem Trockner gefördert und dort zu Pulver getrocknet werden.

Die durchgeführten Versuche hatten folgende Ergebnisse :

| | | |
|---|---|---|
| Druckgas | Luft | Fruchtfleisch 70 % |
| Druck bis | 60 bar | Kerne, Stengel u.a. 30 % |
| Verweilzeit | keine | Wassergehalt 65 % |

Das trockene Pulver hat einen Wasseranteil von 6%.

Beispiel 10 : Vollfettsojabohnen

Um nach dem heutigen Stand der Technik ein rieselfähiges Vollfettsojamehl mit einer Korngröße kleiner als 100 my zu gewinnen, müßten die Bohnen tiefgekühlt in einer gekühlten, speziellen Mahlvorrichtung zerkleinert werden, wobei nach dem Mahlen Kondenswasser auftreten kann.

Mit der erfindungsgemäßen Vorrichtung ist ein solches Mehl ohne Vorkühlen und ohne Kondenswasserbildung herzustellen.

| Druckgas | Luft/CO$_2$ | Druck bis 60 bar |
|---|---|---|
| Verweilzeit | keine. | |

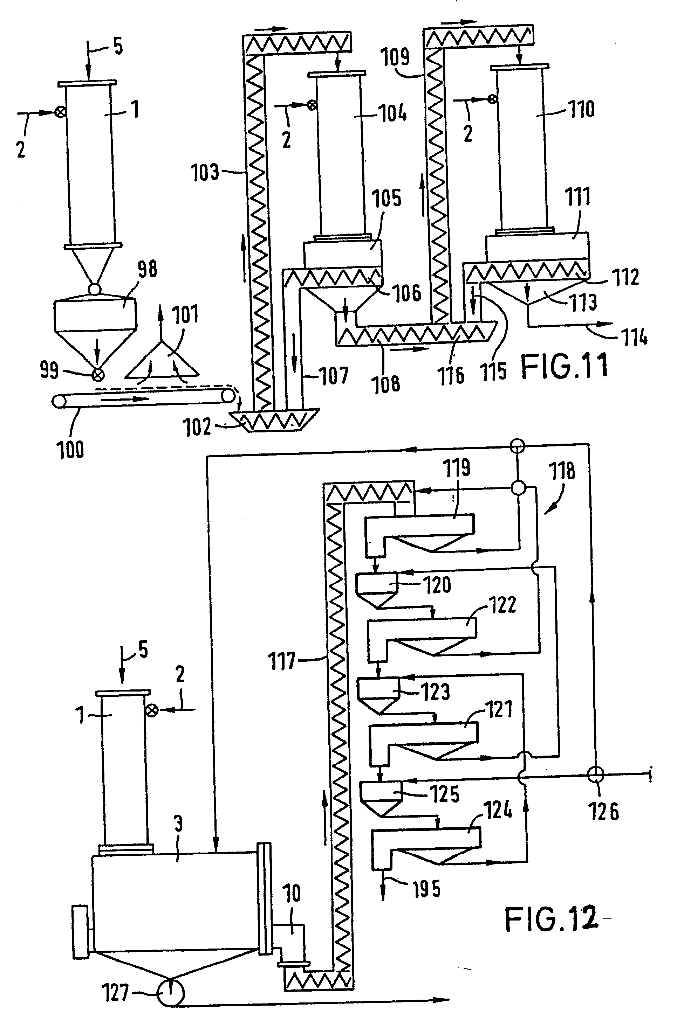

Den Verfahrensablauf zeigt Figur 11 wie folgt :

Die Vollfettsojabohnen werden über die Zuleitung 5 in einen ersten Druckzylinder 1 eingefüllt und wie üblich durch die Zuleitung 2 mit Druck beaufschlagt und anschließend in einer normalen, vertikalen Expansionskammer 98 so gesprengt, daß die Schalen abspringen, jedoch die Bohnen nur grob zerkleinert werden. Die so gesprengte Mischung aus Schalen und grobkörnigen Bohnen wird durch den Auslaß 99 auf eine Fördervorrichtung 100, vorzugsweise ein Endlosförderband, gegeben. Über dieser Fördervorrichtung befindet sich eine Saugvorrichtung 101, welche die Schalen absaugt. Die groben Bohnenstücke werden hintereinandergeschalteten Fördervorrichtungen 102 und 103 zugeführt, die diese in einen zweiten Druckzylinder 104 einfüllen. Der zweite Druckzylinder wird wieder bei 2 mit Druck beaufschlagt. Danach erfolgt das Sprengen durch nicht gezeichnete Düsen in einer Entspannungskammer 105. Durch die eingesetzte, vorzugsweise einfahrbare Trennvorrichtung 106, z.B. in Form einer Förderschnecke, wird der Anteil der Bohnen mit feinerer Korngröße von demjenigen mit gröberer Korngröße getrennt. Der gröbere Anteil kann mit neuem gröberem Gut gemischt und anschließend über die Leitung 107 und die beschriebenen Fördervorrichtungen 102 und 103 in dem zweiten Druckzylinder 104 wiederholt gesprengt werden. Der feinere Kornanteil wird über weitere Fördervorrichtungen 108 und 109 in einen dritten Druckzylinder 110 eingefüllt und erneut gesprengt. Durch entsprechende Wahl der Druckbeaufschlagung bei 2 und durch spezielle nicht gezeichnete Düsen erfolgt das Sprengen bei Überführung in die weitere Expansionskammer 111, die wieder mit einer eingesetzten, vorzugsweise einfahrbaren Trennvorrichtung 112 versehen ist. Hier wird der Anteil mit einer Korngröße kleiner als 100 my abgetrennt und aus dem Sammelraum 113 über Leitung 114 abgezogen und abgefüllt. Der gröbere Anteil wird durch die Leitung 115 und die Fördervorrichtung 116 zum wiederholten Sprengen zu dem dritten Druckzylinder 110 zurückgeführt.

Durch die erfindungsgemäße Vorrichtung, vor allem durch die Entspannungskammern und die darin befindlichen Trennvorrichtungen, wird erreicht, daß kontinuierliche Ströme von rieselfähigem Vollfettsojamehl mit Korngrößen kleiner als 100 my abfüllbar sind. Der gesamte Verfahrensvorgang läuft ohne Vorkühlen der Bohnen, ohne Kühlen während des Zerkleinerungsvorgangs und ohne Kondenswasserbildung ab.

## Beispiel 11 : Weintrauben-Most-Gewinnung

Für die Weintrauben-Most-Gewinnung kann wieder die Vorrichtung gemäß Figur 3 verwendet werden. In dem integrierten Druckzylinder wird die Weintraubenmaische aufgeschlossen. Anschließend wird in der Entspannungskammer und der beschriebenen Trennvorrichtung der Most in wenigen Minuten vom Trester abgetrennt werden. Infolge der sehr kurzen Kontaktzeiten zwischen Most und Trester wird gesichert, daß man einen hochqualitativen Most und Wein erhält.,

Der Verfahrensablauf erfolgt gemäß Figur 3 in nachstehender Weise :

Die Weintrauben werden ohne Vorzerkleinern in den Druckzylinder 1 eingefüllt, wie beschrieben mit Druck beaufschlagt und in der Entspannungskammer mit der eingefahrenen Trennvorrichtung so inhomogen gesprengt, daß Rapen, Kerne und dergleichen Festteile unbeschädigt abtrennbar sind. Der Most wird bei 36 ausgetragen, der vom Trester abgetrennt ist, ohne daß die Maische weitergefördert wird. Der vom Trester befreite Most wird im Anschluß an die Leitung 37 weiterverarbeitet.

| Druckgas | Luft/CO$_2$/N$_2$ | Supermost 75 - 80 % |
|---|---|---|
| Druck bis | 10 bar | Preßmost von Trester 10 - 12 % |
| Verweilzeit | keine | Trester 10 - 15 % |

## Beispiel 12 : Zuckerrohr oder zuckerhaltige Güter

Nach dem heutigen Stand der Technik werden bei Zuckerrohrverarbeitung Walzstraßen oder ein Diffusions-Verfahren angewandt. Für die Zuckerrübenverarbeitung wird in der Hauptsache ein Diffusions-Verfahren angewandt. Hierbei sind große Wassermengen erforderlich, es besteht ferner ein großer Energiebedarf und, maschinell betrachtet, ist eine große bebaute Fläche erforderlich. Der in der DE-A-2632045 beschriebene Produktionsvorgang ergibt einen kostengünstigeren Wasser- und Energiebedarf und verhältnismäßig kleine Stellflächen. Demgegenüber ist der Raumbedarf bei der erfindungsgemäßen Vorrichtung mit Druckzylinder, Entspannungskammer und mit der eingesetzten, vorzugsweise einfahrbaren Trennvorrichtung noch wesentlich geringer. Infolge der sofortigen Abtrennung der Feststoffteile aus der gesprengten Maische kann eine sofortige Weiterführung zur Gär- und Destillierstation erfolgen, um Alkohol zu gewinnen. Zum andern kann in einer im Gegenstromprinzip arbeitenden mehrstufigen Auswaschstation Zuckersaft gewonnen werden, wobei in der weiterhin angeschlossenen mehrstufigen Extraktionsbatterie der Zuckersaft von allen Feststoffteilchen befreit und zur Zuckergewinnung weitergeleitet wird. Die abgetrennte Bagasse ist frei von Mark und kann der Papierindustrie als Zellstoff angeboten werden.

Die durchgeführten Versuche brachten folgende Ergebnisse :

```
Druckgas        Luft/CO₂/N₂    aus 12%-igem Saft werden
Druck           40 - 60 bar    11 % Zucker gewonnen.
Verweilzeit     30 Sekunden    Bagasse frei von Mark
Energiebedarf, auf 1 kg Zucker berechnet, 0,8 kW/kg.
```

Figur 12 zeigt den Verfahrensablauf :

Das vorzerkleinerte Zuckerrohr oder die Zuckerrüben werden wieder in den Druckzylinder 1 eingefüllt und mit Druck beaufschlagt. In der Entspannungskammer 3 wird mittels der eingefahrenen Trennvorrichtung 10 die Bagasse vom Saft getrennt. Die Bagasse wird aus der Trennvorrichtung 10 mittels einer Fördervorrichtung 117 zu einer mehrstufig im Gegenstromprinzip arbeitenden Trennvorrichtung 118 zugeführt bzw. einer Auswaschbatterie mit einer ersten Stufe 119. Das abgetrennt angereicherte Extraktionswasser wird in die Entspannungskammer 3 zurückgeleitet. Die aus der Stufe 119 abgetrennt Bagasse fließt in den Vorratsbehälter 120. Dort erfolgt eine Mischung mit angereichertem Extraktionswasser, welches von der Stufe 121 kommt. Die im Vorratsbehälter 120 befindliche Bagasse fließt mit der Wassermischung in die Stufe 122 ein. Das aus der Stufe 122 abgetrennte Extraktionswasser wird zu der Stufe 119 zurückgeführt. Die von dem Extraktionswasser befreite Bagasse fällt in den weiteren Vorratsbehälter 123 und wird mit dem aus der Stufe 124 kommenden Extraktionswasser vermischt. Die Bagasse und die Wassermischung aus dem Vorratsbehälter 123 fällt in die Stufe 121. Der Vorgang wiederholt sich über den Vorratsbehälter 125 zu der Stufe 124, während das angereicherte Extraktionswasser aus der Stufe 121 zu dem Vorratsbehälter 120 geleitet wird. Die im Vorratsbehälter 125 befindliche Bagasse wird mit frischem Wasser von der Anschlußstelle 126 gemischt, in die Stufe 124 geleitet, von wo das angereicherte Extraktionswasser zum Vorratsbehälter 123 gelangt. Die ausgelaugte Bagasse wird durch die Leitung 126 ausgetragen. Der in den beschriebenen Stufen konzentrierte Zuckersaft kann aus der Entspannungskammer 3 bei Abzug 195 abgeführt und zur weiteren Verarbeitung gebracht werden. Figur 12 stellt ein besonderes Beispiel für die verschiedenen Stufen der Trennvorrichtung 118 dar, wobei die Anzahl der Stufen je nach gewünschter Konzentration von Zucker im Saft geändert werden kann.

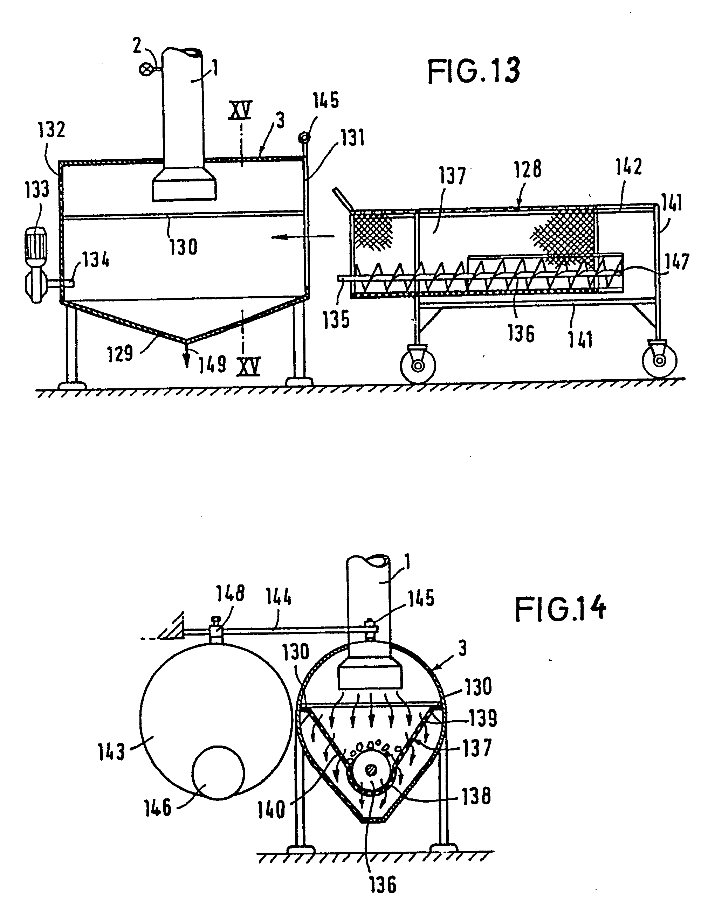

Die Figuren 13 und 14 zeigen ein weiteres Ausführungsbeispiel eines wichtigen Teils der erfindungsgemäßen Vorrichtung mit einer Entspannungskammer 3 und einer in diese einfahrbaren Trennvorrichtung 128, die mit allen erforderlichen Trenn- und Förderungsaggregaten ausgestattet ist. Der Druckzylinder 1 ist mittig oder außermittig oder seitlich tangential an die Entspannungskammer 3 angeschlossen und wird, wie oben mehrfach beschrieben, nach Einfüllen des Gutes mit Druck beaufschlagt. Die Entspannungskammer 3 ist im wesentlichen als Zylinder mit horizontaler Achse ausgebildet, wobei der untere Teil 129 einen konischen Auslauf für abgetrennte flüssige oder feinkörnige Anteile besitzt. In einer bestimmten geeigneten Höhe sind innerhalb des Zylinders in dessen Längsrichtung beiderseitig Laufschienen 130 angebracht, auf denen die einschiebbare Trennvorrichtung 128 geführt ist. Die in Figur 13 dargestellte rechte Stirnseite der Entspannungskammer 3, die senkrecht zur Bildebene verläuft, ist, soweit für das Einschieben der Trennvorrichtung 128 erforderlich, geöffnet, wobei es sich versteht, daß an den Rändern Dichtungen vorgesehen sein können. Diese Stirnwand ist mit dem Bezugszeichen 131 versehen. An der gegenüberliegenden linken Stirnwand 132 der Entspannungskammer 3 ist ein Regelgetriebe mit Elektromotor 133 so angeschlossen, daß nur ein Teil der Antriebswelle 134 in die Entspannungskammer 3 hineinragt. Die Antriebswelle 134 ist durch einfaches Zusammenstecken nach dem Einfahren der Trennvorrichtung 128 mit einer Schneckenachse einer Förderschnecke 136 kuppelbar, die im unteren Teil eines Loch- oder Sieb-Körpers 137 drehbar angeordnet ist. Dieser Körper besteht aus einem unteren halbzylindrischen Teil 138 und zwei sich hieran anschließenden schräg nach außen laufenden Loch- oder Siebflächen 139 und 140 (Figur 14). Das Fahrgestell 141 dient zum Heranfahren der Trennvorrichtung 128 an die Entspannungskammer 3 bzw. zum Herausfahren, wobei das Fahrgestell aber stets außerhalb der Entspannungskammer verbleibt. Auch das Fahrgestell besitzt entsprechende Laufschienen 142 für die Trennvorrichtung 128.

Gemäß einer vorteilhaften Ausgestaltung dieser Vorrichtung, die insbesondere in Figur 14 veranschaulicht ist, ist zu der Stirnwand 131 ein Verschlußdeckel 143 vorgesehen, der auf einem waagerechten Arm 144 längsverschieblich und feststellbar ist. Der Arm 144 ist um eine feststehende vertikale Achse 145 schwenkbar. Der Deckel 143 weist im unteren Bereich eine kreisrunde Öffnung 146 auf, an deren Rand eine nach außen ragende Hülse angeschweißt ist, die ihrerseits den nach dem Einfahren der Trennvorrichtung 128 in die Entspannungskammer aus dieser herausragenden Teil 147 der Förderschnecke 136 überdeckt, und zwar so, daß entweder stirnseitig oder nach unten hin in diesem herausragenden Bereich ein Auslaß verbleibt. Die Wirkungsweise ist im wesentlichen folgende.

Während des Einschiebens der Trennvorrichtung 128 befindet sich der Verschlußdeckel 143 auf dem äußeren Ende des waagerechten Arms 144, so daß das rechte Stirnende der Entspannungskammer 3 offen ist. Sobald die Trennvorrichtung 128 in Richtung des Pfeiles eingeschoben ist und das Fahrgestell 141 entfernt ist, kann der Arm 144 um die vertikale Achse so weit geschwenkt werden, daß sich der Arm achsparallel zu der Entspannungskammer, d.h. senkrecht zur Bildebene der Figur 14, befindet. Der Verschlußdeckel 143 kann dabei um eine schwenkbare Buchse 148 bedreht werden, so daß er wieder parallel zur Bildebene der Figur 14 verläuft. Anschließend wird der Verschlußdeckel 143 auf das Stirnende der Entspannungskammer geschoben und am Rande mittels Befestigungsklemmen an einem Gegenflansch befestigt werden. Das Öffnen der Entspannungskammer und Herausfahren der Trennvorrichtung geht auf umgekehrtem Wege vonstatten. Während des Betriebes treibt der Getriebemotor 133 die Förderschnecke 136 an, die bewirkt, daß die nach Absieben zurückgebliebenen groben Teile aus dem inhomogen gesprengten Gut nach außen gefördert werden. Der flüssige oder feinkörnige Anteil sammelt sich in dem unteren konischen Teil 129 der Entspannungskammer 3 und kann durch einen Auslaß 149 nach außen abgezogen werden.

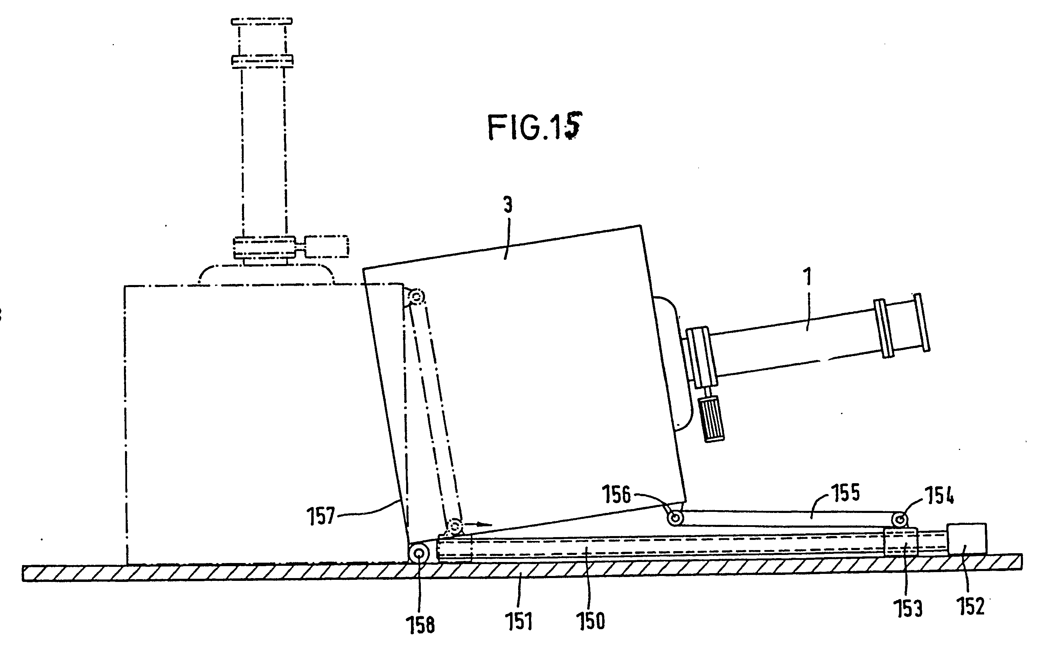

Figur 15 zeigt ein Ausführungsbeispiel einer kompakten Baueinheit, bestehend aus einem Druckzylinder 1 und einer Entspannungskammer 3, in welcher sich wieder eine nicht gezeichnete Trennvorrichtung 10 befindet. Diese Baueinheit ist mit einer Kippvorrichtung ausgestattet, um sie um nahezu 90° zu schwenken und einen erleichterten Transport zu den jeweiligen Einsatzstellen zu ermöglichen. Die Kippvorrichtung weist eine Gewindespindel 150 auf, die mit kleinem Abstand oberhalb einer Unterlage 151 drehbar gelagert ist, und zwar mittels eines nicht gezeichneten Lagers am linken Ende und einem Anschluß an einen Antriebsmotor 152 am rechten Ende. Auf dieser Gewindespindel sitzt eine Muffe 153 mit entsprechendem Innengewinde, an welcher über Gelenk 154 ein Hebelarm 155 angelenkt ist. Das andere Ende des Hebelarms 155 steht über ein weiteres Gelenk 156 mit einer Kante der Entspannungskammer 3 in Verbindung. An einer Kante des Bodens 157 der Entspannungskammer 3 befindet sich ein weiteres Gelenk 158, das andererseits mit der Unterlage 151 verbunden ist. Durch entsprechende Wahl der Drehrichtung des Antriebsmotors 152 kann die Muffe 153 auf der Gewindespindel im Bild der Figur 15 nach links verschoben werden, wodurch sich die Baueinheit in die strichpunktiert gezeichnete vertikale Betriebslage anhebt. In der ausgezogen gezeichneten Kippstellung kann die Baueinheit wegen der geringen Höhe leicht transportiert werden.

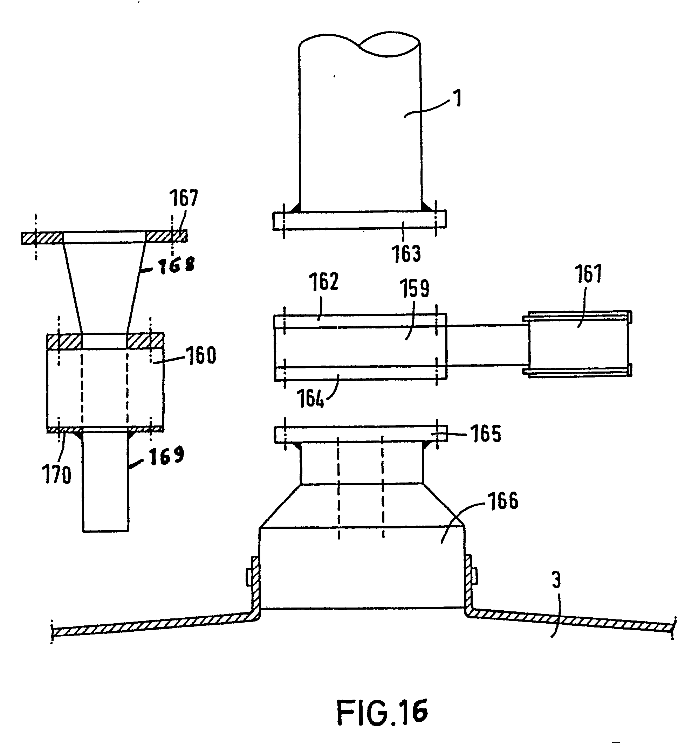

Figur 16 zeigt schematisch nebeneinander zwei im Durchmesser unterschiedliche Expansionsventile 159 und 160. Das Expansionsventil 159, welches durch eine vereinfacht gezeichnete Betätigungseinheit 161 geöffnet oder geschlossen werden kann, hat einen großen Durchmesser und kann mittels eines oberen Flansches 162 mit dem Flansch 163 des Druckzylinders 1 und mittels eines unteren Flansches 164 mit dem Flansch 165 eines Aufsatzes 166 der Entspannungskammer 3 verbunden werden. Das Expansionsventil 160 mit kleinem Durchmesser besitzt einen oberen Flansch 167, der dem Flansch 162 im wesentlichen entspricht und der mit dem Flansch 163 verbunden werden kann. Hieran schließt sich ein konisch verjüngtes Teil 168 an, das zu dem eigentlichen Expansionsventil 160 führt. Ein Verlängerungsrohr 169 auf der Unterseite des Expansionsventils 160 kann in den Aufsatz 166 eingesteckt werden. Der Flansch 165 hat zusätzliche, weiter innen liegende Bohrungen, so daß hiermit der untere Flansch 170 des Expansionsventils 160 verbunden werden kann.

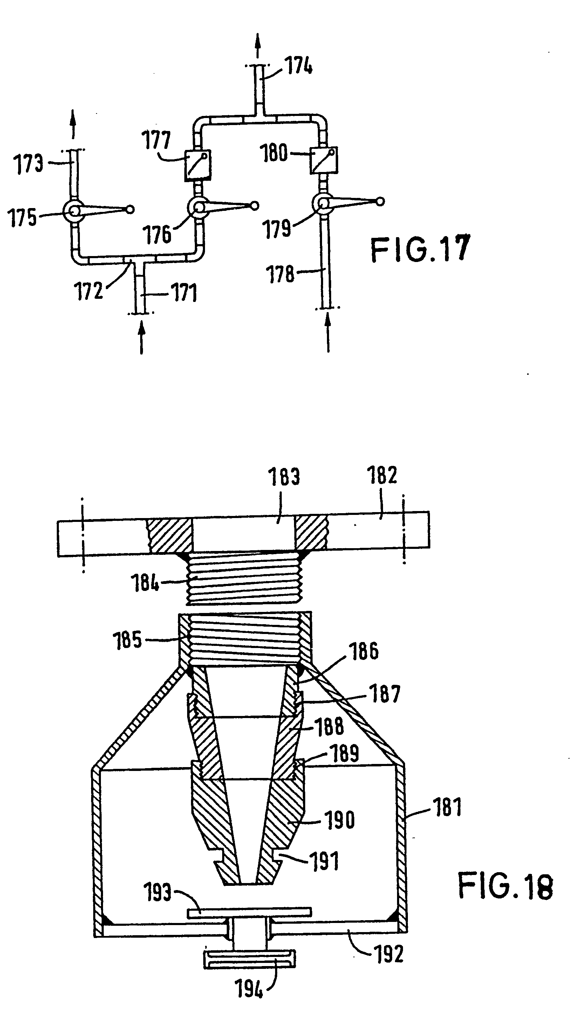

Figur 17 zeigt vereinfacht eine Rohrkombination für die wahlweise Zuführung von Druckgas und Waschwasser in den Druckzylinder bzw. in die Entspannungskammer. Der Waschwassereintritt 171 führt zu einem T-Stück 172, welches das Waschwasser in zwei Richtungen verteilt, und zwar einmal zu einem Anschluß 173 an einen Waschkranz der Entspannungskammer und zum anderen zu einer gemeinsamen Leitung 174. In dem einen Rohrstrang sitzt ein Regelventil 175 und in dem anderen Rohrstrang ein weiteres Regelventil 176. an das letztere schließt sich noch ein Rückschlagventil 177 an. Das Druckgas wird über das Rohr 178 zugeführt, in dem ebenfalls ein Regelventil 179 und anschließend ein Rückschlagventil 180 angeordnet sind. Die Verbindung führt ebenfalls zu der gemeinsamen Leitung 174. Die gemeinsame Leitung 174 führt direkt zu dem Druckgaseintritt des Druckzylinders. Wenn das Regelventil 179 für das Druckgas geöffnet ist, ist das Regelventil 176 für das Waschwasser geschlossen. Es kann dann nur Druckgas durch die gemeinsame Leitung 174 strömen, wobei das Rückschlagventil 177 die Gaszufuhr zu dem Wasseranschluß sperrt. Die beschriebenen Ventile sind gegenseitig so verriegelt, daß entweder nur Waschwasser oder nur Druckgas zugeführt werden kann.

Figur 18 zeigt ein Ausführungsbeispiel einer Düsenkonstruktion, die von einer Ablenkglocke 181 umgeben ist und die in die Entspannungskammer hineinragt. Bei dieser Konstruktion ist auf der Unterseite eines Flansches 182 der Entspannungskammer am Rande einer Durchtrittsöffnung 183 eine Muffe 184 mit Außengewinde angeschweißt. Am oberen Ende der Ablenkglocke ist am Rande einer entsprechenden Durchtrittsöffnung eine weitere Muffe 185 mit Innengewinde angeschweißt, so daß die beiden Muffen ineinander geschraubt werden können. Stattdessen kann auch ein Bajonettverschluß verwendet werden. An das untere Ende der Muffe 185 schließt sich ein erstes Düsenstück 186 an, welches ebenfalls am Rand angeschweißt werden kann. Im unteren Teil auf dem Außenumfang besitzt das Düsenstück 186 ein Außengewinde 187, auf welchs ein zweites Düsenstück 188 aufgeschraubt werden kann. Entsprechend ist am unteren Umfang des zweiten Düsenstückes 188 ein weiteres Außengewinde 189 vorgesehen, auf welches ein drittes Düsenstück 190 aufgeschraubt werden kann. Es versteht sich, daß die Düsenstücke 188 und 190 entsprechende Innengewinde aufweisen. Das dritte Düsenstück 190 besitzt noch äußere Bohrungen 191 zum Einsatz eines Spannwerkzeuges. Durch entsprechende Wahl der Düsenstücke kann eine einfache Düsenveränderung, insbesondere der Austrittsöffnung, vorgenommen werden. Die Ablenkglocke 181 ist am unteren Ende im wesentlichen offen. Es können hier aber Streben 192 zur Halterung eines höhenverstellbaren Pralltellers 193 mit Verstellrad 194 angeschweißt werden.

## Patentansprüche

1. Vorrichtung zur Explosionszerkleinerung von organischen Produkten, insbesondere von Samen, Früchten oder Pflanzen, mit wenigstens einer Druckkammer (1), einer darunter angeordneten Entspannungskammer (3) sowie einem Absperrorgan (4) zwischen Druckkammer (1) und Entspannungskammer (3), wobei der Druckkammer (1) eine Einrichtung zur Zuführung von Druckgas (2) zugeordnet ist, und mit einer Trennvorrichtung (10) ; welche so gestaltet ist, daß die durch inhomogenes Sprengen nicht gesprengten harten Anteile wie Kerne, Stengel oder Schalenreste von den übrigen gesprengten Anteilen abtrennbar sind, dadurch gekennzeichnet, daß die horizontale Ausdehnung der Entspannungskammer größer als die vertikale Ausdehnung der Entspannungskammer ist, und daß die Trennvorrichtung (10) in der Entspannungskammer (3) angeordnet und so ausgebildet ist, daß die durch inhomogenes Sprengen nicht gesprengten harten Anteile wie Kerne, Stengel oder Schalenreste separat aus der Entspannungskammer (3) austragbar sind.

2. Vorrichtung nach Anspruch 1, dadurch gekennzeichnet, daß die Trennvorrichtung (10) in die Entspannungskammer (3) einfahrbar und mit den nicht gesprengten Anteilen ausfahrbar ist.

3. Vorrichtung nach Anspruch 1 oder 2, dadurch gekennzeichnet, daß die Entspannungskammer (3) einen konisch nach dem mittleren Bereich zu laufenden Auslauf (11 ; 129) für die gesprengten flüssigen, breiartigen und feinkörnigen Anteile aufweist, und daß an die Trennvorrichtung (10) ein Auslaß (12) für die harten, grobkörnigen Anteile angeschlossen ist.

4. Vorrichtung nach Anspruch 3, dadurch gekennzeichnet, daß an den Auslauf (11) für die flüssigen, breiartigen und feinkörnigen Anteile eine Fördervorrichtung zu einem statischen Mischer und Wärmeaustauscher (13 ; 92) angeschlossen ist, und daß eine Siebvorrichtung (14 ; 93) und eine Ölseparator-Zentrifuge (17 ; 94) mit einem Wasserablauf (18 ; 96), einem Abzug für Pulpe (19 ; 97) und einem Öl-Abzug (20 ; 95) nachgeschaltet sind.

5. Vorrichtung nach einem der Ansprüche 1 bis 3, dadurch gekennzeichnet, daß eine mehrstufige Auswaschstation (89) angeschlossen ist.

6. Vorrichtung nach einem der Ansprüche 1 bis 3, dadurch gekennzeichnet, daß eine Gär- und Destillationsstation angeschlossen ist.

7. Vorrichtung nach Anspruch 3, dadurch gekennzeichnet, daß an den Auslaß (12) für harte, grobkörnige Anteile eine Leitung (38) zum Zurückführen von unerwünscht groben Anteilen zu der Druckkammer (1) angeschlossen ist.

8. Vorrichtung nach Anspruch 1, dadurch gekennzeichnet, daß der Druckkammer (1 ; 51) mehrere Behälter (39 bis 44 ; 63 bis 68) für unterschiedliche Kornarten oder Rohstoffe und Dosiervorrichtungen (45 bis 50) vorgeschaltet sind.

9. Vorrichtung nach einem der vorhergehenden Ansprüche, dadurch gekennzeichnet, daß die Trennvorrichtung (10 ; 53) eine Förderschnecke aufweist.

10. Vorrichtung nach Anspruch 1, dadurch gekennzeichnet, daß mehrere Druckkammern (57 bis 62) unabhängig voneinander und nacheinander schaltbar an eine zentrale Entspannungskammer (72) angeschlossen sind.

11. Vorrichtung nach Anspruch 10, dadurch gekennzeichnet, daß die Entspannungskammer (72) mit einem Schnellwechsel-Entlüftungsfilter (83) versehen ist.

12. Vorrichtung nach Anspruch 1, dadurch gekennzeichnet, daß an die Entspannungskammer (3 ; 98) eine Fördervorrichtung (100) mit einer Schalen-Saugvorrichtung (101) angeschlossen ist.

13. Vorrichtung nach Anspruch 12, dadurch gekennzeichnet, daß der Fördervorrichtung (100) weitere Fördervorrichtungen (102, 103, 108, 109), Druckkammern in Form von Druckzylindern (104, 110) und Entspannungskammern (105, 111) mit Trennvorrichtungen (106, 112) nachgeschaltet sind.

14. Vorrichtung nach Anspruch 1, dadurch gekennzeichnet, daß eine mehrstufige Auswaschbatterie (119, 121, 122, 124) mit zwischengeschalteten Vorratsbehältern (120, 123, 125) und wechselseitigen Rückführleitungen angeschlossen ist.

15. Vorrichtung nach Anspruch 1, dadurch gekennzeichnet, daß die Entspannungskammer (3) Laufschienen (130) für eine einschiebbare Trennvorrichtung (128) aufweist, und daß die Trennvorrichtung außerhalb der Entspannungskammer (3) von einem Fahrgestell (141) getragen ist.

16. Vorrichtung nach Anspruch 15, dadurch gekennzeichnet, daß die Entspannungskammer (3) an einer Stirnwand (132) mit einem Regelgetriebe und Elektromotor (133) versehen ist, daß ein Teil der Antriebswelle (134) in die Entspannungskammer (3) hineinragt und mit der Schneckenachse einer Förderschnecke (136) kuppelbar ist, und daß an der anderen Stirnwand (131) ein abnehmbarer Verschlußdeckel (143) vorgesehen ist.

17. Vorrichtung nach Anspruch 16, dadurch gekennzeichnet, daß die Förderschnecke (136) in einem halbzylindrischen Teil (138) eines Siebkörpers (137) angeordnet ist, daß mit den Rändern des halbzylindrischen Teiles (138) schräg nach außen laufende Siebflächen (139, 140) verbunden sind.

18. Vorrichtung nach Anspruch 16 oder 17, dadurch gekennzeichnet, daß die Entspannungskammer einen Verschlußdeckel (143) aufweist, der an einem waagerechten Arm (144) längsverschieblich und schwenkbar angehängt ist, und daß der Arm um eine feststehende vertikale Achse (145) schwenkbar ist.

19. Vorrichtung nach Anspruch 1, dadurch gekennzeichnet, daß eine Baueinheit, bestehend aus einem Druckzylinder (1) und einer Entspannungskammer (3), mit einer Kippvorrichtung zur Transporterleichterung versehen ist.

20. Vorrichtung nach Anspruch 19, dadurch gekennzeichnet, daß die Kippvorrichtung eine Gewindespindel (150), einen Antriebsmotor (152) und einen Hebelarm (155) mit Gelenken (154, 156) aufweist.

21. Vorrichtung nach Anspruch 1, dadurch gekennzeichnet, daß zwischen der als Druckzylinder (1) ausgebildeten Druckkammer und der Entspannungskammer (3) im Durchmesser unterschiedliche Expansionsventile (159, 160) einsetzbar sind.

22. Vorrichtung nach Anspruch 21, dadurch gekennzeichnet, daß das Expansionsventil (159, 160) in die Entspannungskammer (3) hineinragt und von einer Ablenkglocke (181) umgeben ist.

23. Vorrichtung nach Anspruch 22, dadurch gekennzeichnet, daß das Expansionsventil aus mehreren zusammenschraubbaren Düsenstücken (186, 188, 190) besteht.

24. Verfahren zur Explosionszerkleinerung von organischen Produkten, insbesondere von Samen, Früchten oder Pflanzen, bei welchem die Produkte einem hohen Druck eines Gases ausgesetzt und anschließend durch plötzliche Druckentspannung gesprengt werden, wobei die Druckbeaufschlagung und die Entspannung so gewählt werden, daß ein inhomogenes Sprengen der Produkte in nicht gesprengte harte Anteile wie Kerne, Stengel oder Schalenreste einerseits und flüssige breiartige oder feinkörnige Anteile andererseits erfolgt, dadurch gekennzeichnet, daß die Anteile unmittelbar nach dem Entspannen innerhalb der Entspannungskammer (3) voneinander getrennt werden.

## Claims

1. Apparatus for the explosion-fragmentation of organic products, in particular seeds, fruits or plants, having at least one pressure chamber (1), an expansion chamber (3) located therebelow, as well as a shut-off member (4) between the pressure chamber (1) and expansion chamber (3), a device for supplying compressed gas (2) being associated with the pressure chamber (1) and having a separating device (10), which is designed so that the hard components which have not been fragmented by the non-homogeneous explosion, such as kernels, stalks or skin residues, can be separated from the remaining fragmented components, characterised in that the horizontal extent of the expansion chamber is greater than the vertical extent of the expansion chamber and that the separating device (10) is located in the expansion chamber (3) and is constructed so that the hard components which have not been fragmented by non-homogeneous explosion, such as kernels, stalks or skin residues, can be removed separately from the expansion chamber (3).

2. Apparatus according to Claim 1, characterised in that the separating device (10) can be inserted in the expansion chamber (3) and can be removed with the non-fragmented components.

3. Apparatus according to Claim 1 or 2, characterised in that the expansion chamber (3) has an outlet (11; 129) tapering conically towards the central region, for the fragmented, liquid, pulp-like and fine-grained components, and that an outlet (12) for the hard, coarse-grained components is connected to the separating device (10).

4. Apparatus according to Claim 3, characterised in that connected to the outlet (11) for the liquid, pulplike and fine-grained components is a conveying device leading to a static mixer and heat-exchanger (13 ; 92), which is followed by a filter device (14 ; 93) and an oil-separation centrifuge (17 ; 94) with a water outlet (18 ; 96), an outlet for pulp (19 ; 97) and an oil outlet (20 ; 95).

5. Apparatus according to one of Claims 1 to 3, characterised in that a multi-stage washing-out station (89) is connected.

6. Apparatus according to one of Claims 1 to 3, characterised in that a fermentation and distillation station is connected.

7. Apparatus according to Claim 3, characterised in that a pipe (38) for returning undesirably coarse components to the pressure chamber (1) is connected to the outlet (12) for hard, coarse-grained components.

8. Apparatus according to Claim 1, characterised in that installed upstream of the pressure chamber (1 ; 51) is a plurality of containers (39 to 44 ; 63 to 68) for various types of grain or raw materials and metering devices (45 to 50).

9. Apparatus according to one of the preceding Claims, characterised in that the separating device (10 ; 53) comprises a screw conveyor.

10. Apparatus according to Claim 1, characterised in that a plurality of pressure chambers (57 to 62), which can be operated independently and in succession, is connected to a central expansion chamber (72).

11. Apparatus according to Claim 10, characterised in that the expansion chamber (72) is provided with a quick-change exhaust filter (83).

12. Apparatus according to Claim 1, characterised in that a conveyor device (100) with a suction hood (101) is connected to the expansion chamber (3 ; 98).

13. Apparatus according to Claim 12, characterised in that following the conveying device (100) are additional conveying devices (102, 103, 108, 109), pressure chambers in the form of pressure cylinders (104, 110) and expansion chambers (105, 111) having separating devices (106, 112).

14. Apparatus according to Claim 1, characterised in that a multi-stage washing-out battery (119, 121, 122, 124) with intermediate storage vessels (120, 123, 125) and reciprocal return pipes is connected.

15. Apparatus according to Claim 1, characterised in that the expansion chamber (3) comprises guide rails (130) for an insertable separating device (128), and that outside the expansion chamber (3), the separating device is supported by a trolley (141).

16. Apparatus according to Claim 15, characterised in that the expansion chamber (3) is provided on one end wall (132) with a variable-speed drive and electric motor (133), that part of the drive shaft (134) projects into the expansion chamber (3) and can be coupled to the axle of a screw conveyor (136), and that on the other end wall (131), a removable cover plate (143) is provided.

17. Apparatus according to Claim 16, characterised in that the screw conveyor (136) is located in a semi-cylindrical part (138) of a sieve (137), that sieve surfaces (139, 140) extending obliquely outwards are connected to the edges of the semi-cylindrical portion (138).

18. Apparatus according to Claim 16 or 17, characterised in that the expansion chamber comprises a cover plate (143), which can be moved longitudinally and is pivoted on a horizontal arm (144) and that the arm can be pivoted about a fixed vertical axis (145).

19. Apparatus according to Claim 1, characterised in that a structural unit consisting of a pressure cylinder (1) and an expansion chamber (3) is provided with a tilting device to facilitate transport.

20. Apparatus according to Claim 19, characterised in that the tilting device comprises a threaded spindle (150), a drive motor (152) and a lever arm (155) with articulated joints (154, 156).

21. Apparatus according to Claim 1, characterised in that expansion valves (159, 160) with different diameters can be inserted between the pressure chamber constructed as a pressure cylinder (1) and the expansion chamber (3).

22. Apparatus according to Claim 21, characterised in that the expansion valve (159, 160) projects into the expansion chamber (3) and is surrounded by a deflector bell (181).

23. Apparatus according to Claim 22, characterised in that the expansion valve consists of several nozzle-pieces (186, 188, 190) which can be screwed together.

24. Method for the explosion-fragmentation of organic products, in particular seeds, fruits or plants, in which the products are subjected to the high pressure of a gas and are subsequently exploded by sudden reduction of pressure, the pressure applied and its reduction are selected so that a non-homogeneous explosion of the products into non-fragmented hard components, such as kernels, stalks or skin residues on the one hand, and liquid, pulp-like or fine-grained components on the other hand, takes place, characterised in that the components are separated from each other immediately after the pressure reduction within the expansion chamber (3).

## Revendications

1. Dispositif de fragmentation de produits organiques par explosion, en particulier de graines, de fruits ou de plantes, comportant au moins une chambre de pression (1), une chambre de détente (3) disposée au-dessous de celle-ci, ainsi qu'un organe de blocage (4) entre la chambre de pression (1) et la chambre de détente (3), un appareil d'amenée de gaz sous pression (2) étant associé à la chambre de pression (1), et un dispositif de séparation (10), qui est constitué de telle manière que les parties dures, comme les noyaux, les queues ou les restes d'écorce quin'ont pas explosé en raison d'une explosion non homogène, peuvent être séparées des autres parties explosées, caractérisé en ce que l'extension horizontale de la chambre de détente est supérieure à l'extension verticale de la chambre de détente, et en ce que le dispositif de séparation (10) est disposé dans la chambre de détente (3) et constitué de telle manière que les parties dures comme les noyaux, les queues ou les restes d'écorce quin'ont pas explosé en raison d'une explosion non homogène peuvent être retirées séparément de la chambre de détente (3).

2. Dispositif selon la revendication 1, caractérisé en ce que le dispositif de séparation (10) peut être introduit dans la chambre de détente (3) et peut en être sorti avec les parties non explosées.

3. Dispositif selon la revendication 1 ou 2, caractérisé en ce que la chambre de détente (3) comporte un écoulement (11 ; 129) dirigé en forme de cône vers la zone centrale pour les parties liquides, pâteuses et à grains fins explosées, et en ce qu'une sortie (12) destinée aux parties dures, à gros grains, est raccordée au dispositif de séparation (10).

4. Dispositif selon la revendication 3, caractérisé en ce qu'un dispositif de transport vers un mélangeur statique et un échangeur de chaleur (13 ; 92) est raccordé à l'écoulement (11) des parties liquides, pâteuses et à grains fins, et en ce qu'un dispositif de tamisage (14 ; 93) et une centrifugeuse de séparation d'huile (17 ; 94) comportant un écoulement d'eau (18 ; 96), une extraction de pulpe (19 ; 97) et une extraction d'huile (20; 95) sont montés en aval.

5. Dispositif selon l'une des revendications 1 à 3, caractérisé en ce qu'il est raccordé une station de lavage à plusieurs étages (89).

6. Dispositif selon l'une des revendications 1 à 3, caractérisé en ce qu'il est raccordé une station de fermentation et de distillation.

7. Dispositif selon la revendication 3, caractérisé en ce qu'une conduite (38) de renvoi de parties grossières indésirables est raccordée à la chambre de pression (1) à la sortie (12) des parties dures, à grains grossiers.

8. Dispositif selon la revendication 1, caractérisé en ce que plusieurs récipients (39 à 44 ; 63 à 68), destinés à des types de grains ou à des matières brutes différentes, ainsi que des dispositifs de dosage (45 à 50) sont montés en aval de la chambre de pression (1 ; 51).

9. Dispositif selon l'une des revendications précédentes, caractérisé en ce que le dispositif de séparation (10 ; 53) comporte une vis d'amenée.

10. Dispositif selon la revendication 1, caractérisé en ce que plusieurs chambres de pression (57 à 62) sont raccordées en pouvant être mises en communication, indépendamment l'une de l'autre et l'une après l'autre, avec une chambre de détente centrale (72).

11. Dispositif selon la revendication 10, caractérisé en ce que la chambre de détente (72) comporte un filtre de désaération (83) à passage rapide.

12. Dispositif selon la revendication 1, caractérisé en ce qu'un dispositif d'amenée (100) comportant des dispositifs (101) d'aspiration de coquilles est raccordé à la chambre de détente (3 ; 98).

13. Dispositif selon la revendication 12, caractérisé en ce que sont montés, en aval du dispositif d'amenée (100), d'autres dispositifs d'amenée (102, 103, 108, 109), chambres de pression (104, 110) en forme de cylindres compresseurs, et chambres de détente (105, 111) avec dispositifs de séparation (106, 112).

14. Dispositif selon la revendication 1, caractérisé en ce qu'est raccordée une batterie de lavage à plusieurs étages (119, 121, 122, 124), comportant des récipients de réserve intermédiaires (120, 123, 125) et des tubulures de renvoi réciproques.

15. Dispositif selon la revendication 1, caractérisé en ce que la chambre de détente (3) comporte des rails de roulement (130) pour un dispositif de séparation insérable (128), et en ce que le dispositif de séparation est supporté, en dehors de la chambre de détente (3), par un chariot (141).

16. Dispositif selon la revendication 15, caractérisé en ce que la chambre de détente (3) comporte sur une paroi frontale 132 un motovariateur et un moteur électrique (133), en ce qu'une partie de l'arbre d'entrainement (134) fait saillie dans la chambre de détente (3) et peut être accouplé avec l'axe d'hélice d'une vis d'amenée (136), et en ce qu'un couvercle de fermeture (143) amovible est prévu sur l'autre paroi frontale (131).

17. Dispositif selon la revendication 16, caractérisé en ce que la vis d'amenée (136) est disposée dans une partie semi-cylindrique (138) d'un corps de tamis (137), en ce que les surfaces de tamisage (139, 140) dirigées obliquement vers l'extérieur sont reliées aux bords de la partie semi-cylindrique (138).

18. Dispositif selon la revendication 16 ou 17, caractérisé en ce que la chambre de détente comporte un couvercle de fermeture (143) qui est suspendu à un bras horizontal (144) en pouvant coulisser longitudinalement et pivoter, et en ce que le bras peut pivoter autour d'un axe vertical fixe (145).

19. Dispositif selon la revendication 1, caractérisé en ce qu'un module, constitué d'un cylindre compresseur (1) et d'une chambre de détente (3) comporte un dispositif de bascule pour faciliter le transport.

20. Dispositif selon la revendication 19, caractérisé en ce que le dispositif de bascule comporte une broche filetée (150), un moteur d'entrainement (152) et un bras de levier (155) avec des articulations (154, 156).

21. Dispositif selon la revendication 1, caractérisé en ce que des soupapes de détente de divers diamètres (159, 160) peuvent être insérées entre la chambre de pression réalisée sous forme de cylindre compresseur (1) et la chambre de détente (3).

22. Dispositif selon la revendication 21, caractérisé en ce qu'une soupape de détente (159, 160) fait saillie dans la chambre de détente (3) et est entourée par une cloche de déviation (181).

23. Dispositif selon la revendication 22, caractérisé en ce que la soupape de détente se compose de plusieurs éléments d'ajutage (186, 188, 190) qui peuvent être vissés entre eux.

24. Procédé de fragmentation de produits organiques par explosion, en particulier de graines, de fruits ou de plantes, dans lequel les produits sont soumis à une pression élevée d'un gaz et sont ensuite explosés par une détente subite de la pression, l'application de la pression et la détente étant choisies de telle manière qu'il se produit une explosion non homogène des produits, d'une part, en une partie dure non explosée comme des noyaux, des queues ou des restes d'écorce et, d'autre part, en des parties liquides, pâteuses ou en grains fins, caractérisé en ce que les parties sont immédiatement séparées les unes des autres après la détente à l'intérieur de la chambre de détente (3).

FIG.1

FIG.2

FIG.3

FIG.4

FIG.5

FIG.6

EP 0 345 281 B1

FIG.7

FIG.8

FIG.9

FIG.10

FIG.11

FIG.12

FIG.13

FIG.14

FIG.15

EP 0 345 281 B1

167

168

160

170    169

1

163

162    159    161

164

165

166

3

FIG.16

FIG.17

FIG.18